# EUROPEAN PATENT SPECIFICATION

(11) **EP 1 749 301 B1**
(45) Date of publication and mention of the grant of the patent: **06.10.2010**
(21) Application number: 05780027.8
(22) Date of filing: 15.04.2005
(51) Int. Cl.: H01B 1/20

(54) **ELECTRICALLY CONDUCTIVE ELASTOMERS, METHODS FOR MAKING THE SAME AND ARTICLES INCORPORATING THE SAME**
ELEKTRISCH LEITENDE ELASTOMERE, VERFAHREN ZU IHRER HERSTELLUNG UND ARTIKEL DAMIT
ELASTOMERES ELECTROCONDUCTEURS, LEUR PROCEDE DE FABRICATION ET ARTICLES LES CONTENANT

(30) Priority: 15.04.2004 US 562622 P
(43) Date of publication of application: 07.02.2007
(73) Proprietor: Textronics, Inc., Wilmington, DE 19805 (US)
(72) Inventor: KARAYIANNI, Eleni, CH-1206 Geneva (CH); COULSTON, George W., Pittsburgh, Pennsylvania 15238 (US)
(74) Representative: Wegner, Hans
(86) International application number: PCT/US2005/013027
(87) International publication number: WO 2005/117030

(56) References cited:
- WO-A-03/060449
- US-A- 4 054 540
- US-A- 4 273 682
- US-A- 4 505 847
- US-A- 4 774 023
- US-A- 5 858 291
- MAZZOLDI, DE ROSSI, LORUSSI, SCILINGO, PARADISO: "Smart textiles for wearable motion capture systems" AUTEX RESEARCH JOURNAL, vol. 2, no. 4, December 2002 (2002-12), pages 199-203, XP009055966

## Description

### BACKGROUND OF THE INVENTION

The present invention relates to electrically conductive elastomeric compositions that exhibit variable resistance, and a method for making the same into conductive stretch articles containing such electrically conductive elastomeric compositions.

Systems are known that employ variable resistance sensors for strain-sensing. Known variants among these systems are based upon electrically conductive elastomeric materials that display varying electrical resistance upon elastic stretch (*i.e*., elongation or stress when load applied) and recovery (*i.e*., stress when loaded removed).

A primary mechanism for conduction in an electrically conductive composite is the formation of a matrix that is a continuous network of conductive particles within the composite. One example of this mechanism is referred to as the "piezo-resistive phenomenon." In the piezo-resistive phenomenon, electrical resistance of an electrically conductive material is related to the stress loading on the material. In particular, electrically conductive elastomers, comprising a non-conducting polymer matrix with conductive particles therein, form a continuous network of electrical contacts amongst the conductive particles. In these materials, a disruption of the continuous network results in the loss of contacts amongst the conductive particles and an increase in resistance when the elastomer is stretched (*i.e*., elongated or deformed). This is the mechanism for the change in the electrical resistance of the composite material.

U.S. Patent Number 4,444,205 (Jackson) discloses an apparatus for assessing joint mobility. A conductive elastomer based on non-conductive silicone rubber containing dispersed particles of carbon is one component. The conductive elastomer varies its electrical resistance with elongation and contraction.

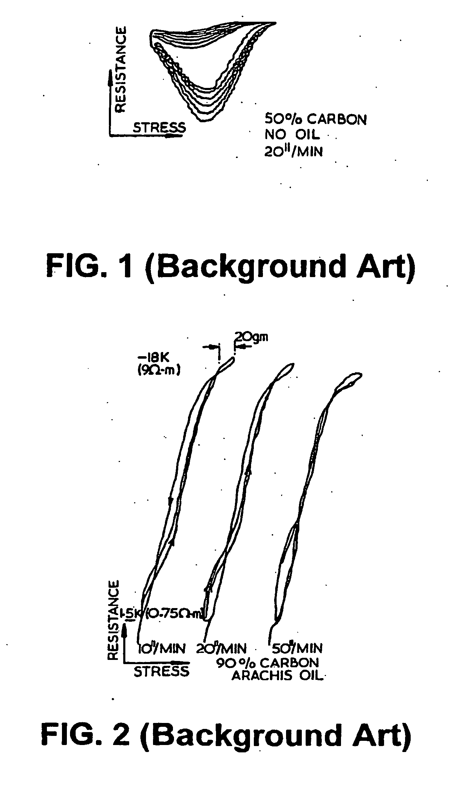

U.S. Patent Number 4,505,847 (Jackson) discloses electrically conductive materials with electrical resistivity that is related to the stress load on the materials. In particular, the materials used are non-conductive silicone rubber containing high levels of carbon graphite (*e*.*g*., 50%-90%) and an oil (*e*.*g*., vegetable oil, arachis oil). Apparently, the added oil enhances the mechanical properties (*e*.*g*., elongation to break) of the blended material with higher carbon graphite loading as compared to the silicone rubber without such oil. FIG. 1 (reproduced from Jackson '847) shows the electrical resistance versus stress loading characteristics of a non-conductive silicone rubber incorporating carbon graphite and containing no oil. As FIG. 1 shows, each cycle of stretch and recovery exhibits a substantial hysteresis effect. More specifically, as can be seen in FIG. 1, the hysteresis loop is different for each stretch and recovery cycle. Due to this hysteresis effect, the electrical resistance value versus stress loading from one stretch and recovery cycle to the next is not predictable to an acceptable degree.

Jackson discloses that when oil is added to the material, the predictability of the electrical resistance versus stress loading of the blended material is enhanced. In particular, this enhanced predictability is manifested by a decrease in the hysteresis loop between stretch and recovery in the presence of the oil. FIG. 2 (reproduced from Jackson '847) shows a conductive silicone rubber loaded with 90% graphite in the presence of arachis oil and at stretch rates of 10, 20 and 50 inches per minute. As can be seen from FIG. 2, the hysteresis loops are small relative to the hysteresis loop shown in FIG. 1. In addition, the change in resistance of the blended material with stress loading is fairly consistent for any repetitive cycle of elastic stretch and recovery. Such behavior provides for a more predictable measure of the electrical resistance change in the blended materials. The '847 patent postulates that the chemical nature of the oil components achieve a plasticizing effect or function as a dispersant for the conductive particles in the composition of the blended materials.

U.S. Patent Number 5,086,785 (Gentile et al) discloses an angular displacement sensor apparatus measuring angular displacement via the change in electrical resistance, resistivity, conductance, or conductivity with stretch, position or applied force. Gentile et al discloses various ways to achieve a variable resistance behavior, including an electrically conductive elastomer sensor (*e*.*g*., carbon impregnated elastomeric rubber, silicone or plastic) and a conductive ink sensor. In particular, Gentile et al discloses that a conductive ink sensor for bending does not exhibit a "memory" when bent toward the straight position. In addition, the ink sensor of Gentile et al returns to the same initial resistance value in the straight/unbent position after each cycle of bending. That is, unlike electrically conductive elastomers, the conductive ink sensor of Gentile et al does not exhibit the hysteresis effect and problems with returning to the initial resistance value.

U.S. Patent Number 5,858,291 (Li) discloses a method for making an electrically conductive strain gauge material. An electrically conductive elastomer based on an olefin copolymer of ethylene and vinyl acetate (EVA) doped with conductive material (*e*.*g*., powdered metal, carbon black) in amounts of 20 wt%- 50 wt%, based upon the polyolefin, is prepared by dry mixing and flash heating. In particular, Li discloses a material with an elongation yield point of only 2% - 8%.

Moreover, Li discloses, after conditioning cycles, the conductor gave repeatable results without a hysteresis effect upon repeated elastic stretch and recovery cycles. According to Li, a flash heating process that raises the temperature of the conductive material to 600 °F for 3-5 seconds stabilizes the resistance of the conductor. However, if no flash heating is employed, the resistance of the conducting material is erratic under repeated elastic stretch and recovery cycles. In addition, Li discloses that after the flash heating treatment, there are a minimum number (*i.e.,* less than 20) of conditioning cycles needed to provide electrical characteristics which vary in a repeatable and predictable fashion.

The background art discussed above indicates that adding conductive particles to an elastomer in a sufficient quantity can: (1) render the elastomer electrically conductive; and (2) provide a variable-resistance material that changes the value of the electrical resistance of the material upon stretch and recovery. However, the background art does not disclose how to eliminate or limit the hysteresis effect from such an electrically conductive elastomer without either adding other materials (e.g., arachis oil) or performing additional processing (e.g., heat processing).

Further, research efforts have also examined approaches to developing strain-sensing materials. A University of Pisa research group (under the direction of Professor De Rossi) proposed two approaches that provide textiles with piezo-resistive properties. These are disclosed in De Rossi et al, "Dressware: Wearable Hardware," Material. Sci. & Eng. C 7, 31-35, 1999, and in Mazzoldi et al, "Smart Textiles for Wearable Motion Capture Systems", AUTEX Research Journal, Volume 2, No 4, December 2002. In this work, De Rossi et al disclose that polypyrole (Ppy) coated stretch fabrics or fibers with Lycra® provide a high "gauge factor" (GF) of about -13 (*i*.*e*., gauge factor is defined as: GF=ΔR/εR₀, where ΔR is the change in electrical resistance; R₀ is the resistance at rest; and ε is the applied strain). However, issues of concern with these coated fabrics/fibers include: (1) aging of the Ppy coating that results in a drift of the sensor resistance over time; and (2) slow response time of the sensors.

In addition, De Rossi et al disclose that after sudden application of a mechanical stimulus the resistance of these Ppy coated fabrics reaches a steady-state only after several minutes. Moreover, the steady-state value of the resistance obtained was not the same as the initial resistance value. De Rossi et al resolved this deficiency with a special algorithm developed to codify the strain by the resistance value in an independent way.

The second approach developed by these research efforts discloses a carbon filled rubber coated stretch fabric or fiber with Lycra® spandex. In this work, the GF of the fabrics was about 2.5. However, as in the first approach, a significant deficiency of the stretch fabrics of this second approach is that the resistance does not return to the initial resistance value after recovery from stretching.

Additional research efforts have been reported by the Philips Research Laboratories, Redhill, UK (Royal Philips Electronics NV, Amsterdam, Netherlands). Two examples of these research efforts include:
(1) Bickerton, "Fiber Interactions within a knitted stretch sensor" Eurowearables 2003, October 2003; and
(2) Farringdon et al, "Wearable Sensor badge and sensor jacket for context awareness," ISWC 1999.
The latest developments reported by this Laboratory describe a knit structure based on two fibers, one conductive (*e*.*g*., carbon) and one elastic (*e*.*g*., Lycra® spandex), wherein the two fibers run together. As this knit structure is stretched, the longitudinal resistance increases by a factor of 5 to 10 times the initial value of the resistance in the relaxed state until a maximum resistance is attained. This increase in resistance with stretch may be due to an increase in the length of the conduction paths through the fabric and in a reduction of the number of inter-fiber contacts.

Disadvantages of the knit structure discussed above include: (1) stretch of the knit structure beyond 60% causes a reduction in resistance; and (2) the conductive carbon fibers used in the knit structure are coarse and cannot be in direct contact with skin if the knit structure is formed into a garment.

In addition, researchers at Philips Research Laboratories have also proposed creating a stretch knit fabric sensor that actually shows a decrease of resistance when stretched via incorporation of a staple fiber. This stretch knit fabric sensor consists of a mix of fibers, at least one of which is conductive (*e*.*g*., carbon or stainless steel). When this stretch knit fabric sensor is stretched, the strain pulls the loops of the conductive yam so as to increase the number of current paths.

However, a disadvantage of the knit fabric sensor discussed above is that there is an initial rise in resistance with stretch that is followed by a decrease in resistance until the resistance value reaches a plateau. This negative slope in a resistance versus percentage of elongation graph would make the predictability of the resistance difficult due to the possibility of multiple values of the percentage of elongation resulting in the same value of resistance. Moreover, an additional disadvantage of this knit fabric sensor is that the change in resistance is not only dependent on the percentage of elongation of the sensor, but also on the rate of the change in percentage of elongation of the sensor. In addition, other background art efforts have been made to develop stress/strain-sensing textiles based on stretch textiles, textile-compatible processes or materials that are inherently not textile-compatible. For example, PCT Patent Application Number WO 2003/060449-A1 (Smela) discloses a "Wearable Effect-Emitting Strain Gauge Device" that is inherently not textile-compatible.

From the above discussion, neither the background art nor previous research efforts disclose that the addition of conductive particles to an elastomer alone will lead to predictable behavior of the electrical resistance as a function of stretching, especially while maintaining the elastic mechanical performance of the material.

In addition, neither the background art nor previous research efforts disclose that an electrically conductive elastomeric structure exhibiting low or no hysteresis (*i*.*e*., a predictable change in resistance upon repetitive cycling) of the material during elastic stretch and recovery is achievable without adding either additional materials (*e*.*g*., arachis oil) or processing steps (e.g., flash heating).

Moreover, neither the background art nor previous research efforts disclose that control over the magnitude of the change in resistance of a textile-compatible, electrically conductive elastomeric structure as a function of stretching over an extensive range (i.e., greater than 10 orders of magnitude) is achievable.

Therefore, there is a need in the art to provide electrically conductive elastomeric materials and structures with elastic stretch and recovery properties compatible with traditional textile knitted or woven fabrics and methods to form such materials and structures. In particular, there is a need in the art for textile-compatible materials that are able to act as predictable stress-load sensors and are simple to manufacture. Desirable performance characteristics of such textile-compatible materials would include:
(1) a well-defined, predictable elongation/elasticity versus electrical resistance property over a significant range of stress loading and resistance; and
(2) electrical resistance with stretch and recovery that does not depend upon the rate of elongation; the applied force that provides the percentage of elongation; or the number of stretch and recovery cycles.

### BRIEF SUMMARY OF THE INVENTION

The invention is defined in independent claims 1, 2, 19, 20.

An example in a first aspect is directed to an electrically conductive elastomeric structure having an electrical resistance value that varies with elastic stretch and recovery. The electrically conductive elastomeric structure comprises an elastomer polymer combined with electrically conductive particles provided in a predetermined concentration that is expressed as a weight ratio of the electrically conductive particles- to-elastomer polymer. The electrically conductive elastomeric structure has an elastic stretch and recovery property that at least one of eliminates or substantially limits a hysteresis effect on the electrical resistance during a cycle of stretch and recovery and after at least five elastic stretch and recovery cycles. In addition, the elastic stretch and recovery property further provides an electrical resistance after recovery to 0% stretch that at least one of equals or substantially equals the initial resistance value during a cycle of stretch and recovery and after at least five elastic stretch and recovery cycles. Moreover, the elastic stretch and recovery property further provides that substantially no permanent physical deformation and substantially no permanent change in the initial electrical resistance occurs as a result of a elongation within the elastic limit (i.e., at an elongation less than the elongation-at-break) of the electrically conductive elastomeric structure. Moreover, the elastic stretch and recovery property, the chemistry of the elastomer polymer and electrically conductive particles and the method of achieving the electrically conductive elastomeric structure further provide a control over the initial value, function and magnitude of electrical resistance change with elongation during the elastic stretch and recovery cycling.

A second example is directed to an electrically conductive elastomeric structure wherein the predetermined concentration of electrically conductive particles-to-elastomer is less than 2:1, and the electrically conductive elastomer structure has an eloagation-at-break of greater than 100%.

A third example is directed to an electrically conductive elastomeric structure wherein the value of the resistance returns, on average, to within the value expected to within 0% to 10% elongation range during load, and preferably to within 10 percent of the initial resistance during an elastic cycle after the resistance is varied over a range of up to ten (10) orders of magnitude of the initial resistance as a result of elongation up to an elastic limit of the electrically conductive elastomeric structure. Preferably, the electrically conductive elastomeric structure provides the performance discussed above with a percentage of elongation of up to 150%.

A fourth example is directed to an electrically conductive elastomeric structure comprising fibers, fabrics and films or to an electrically conductive elastomeric structure comprising fibers, fabrics and films and coated with an elastomer polymer and electrically conductive particle dispersion.

Another example is a method for making an electrically conductive elastomeric structure. According to a preferred method (A), an elastomer polymer is dissolved in a solvent or a mixture of solvents. Electrically conductive particles are added to the dissolved elastomer polymer to form a mixture. The mixture is deposited onto a surface and dried, preferably at a temperature of lower than 180°C, to form the electrically conductive elastomeric structure.

In another method (B), an elastomer polymer is dissolved in a solvent or a mixture of solvents. Electrically conductive particles are dispersed in a solution and the solution is mixed at high speed. The solution of electrically conductive particles is then added to the dissolved elastomer polymer to form a mixture. The mixture is deposited onto a surface and dried, preferably at a temperature of lower than 180°C, to form the electrically conductive elastomeric structure. In the case that the surface has the capability to stretch, the mixture of either method (A) or method (B) is deposited on the surface while stretched, and then dried in the relaxed state. In another embodiment, the mixture formed by either method (A) or method (B) is introduced through a spinneret to form an elastomeric fiber having electrically conductive properties.

In yet another example, the solution of the electrically conductive particles is deposited onto the surface of the elastomer polymer structure, preferably at the stretched state, and then dried in the relaxed state, preferably at a temperature of lower than 180°C.

Preferably, the elastomer polymer is spandex and the electrically conductive particles have an average particle size of less than 100m. More preferably, the elastomer polymer is Lycra® spandex.

Another example is a method for making electrically conductive elastomeric structures comprising: adding electrically conductive particles to an elastomer polymer to form a mixture; melting the mixture of electrically conductive particles and the elastomer polymer; depositing the melted mixture onto a surface; and extruding the mixture to form an electrically conductive elastomeric structure.

It should be noted that "drying" is applied to solvent-based systems, where the process of "drying" has the effect of removing any solvent of the system under a certain temperature. Moreover, in melt-systems, the non-presence of solvent makes it difficult to apply the term of "drying" or "extruding." Alternatively, the term "cooling," which is more directly correlated to drying for melt systems may be used. That is, when we form a melt we typically heat the material to a temperature above the melting point of the material. Then in order to solidify the material we must pass it through a cooling zone.

Yet another example is a method for making electrically conductive elastomeric structures comprising: adding electrically conductive particles to an elastomer polymer to form a mixture; melting the mixture of electrically conductive particles and the elastomer polymer, forcing the mixture into a spinneret to form one or more fibers; and extruding the fibers to form an electrically conductive elastomeric structure.

In an example, the compatibility between the elastomer polymer and conductive additives is further enhanced by surface functionalization of either the elastomer polymer or the conductive additives or both. Such functionalization can create strong attraction forces between the particles and the polymer matrix which can result in more homogeneous and uniform mixtures when blended together, or to improved and resistive coatings when conductive particles are added onto the surface of the elastomer polymer substrate. Such functionalization should however by no means restrict the elastic property of the elastomer nor affect the strength and electrical conductivity of the conductive particles. Surface functionalization routes could include but not limited to organic functionalization, such as covalent modification with neutral or ionic species, attachment of metallic groups, surface adsorption of molecules, oxidation or reduction, and plasma technology.

### BRIEF DESCRIPTION OF DRAWINGS

FIG. 1 is a background art example of a graph of electrical resistance versus stress/elongation showing the hysteresis effect for an electrically conductive elastomer with a 50% carbon loading;

FIG. 2 is a background art example of a graph of electrical resistance versus stress/elongation showing a reduced hysteresis effect for an electrically conductive elastomer with a 90% carbon loading and with arachis oil;

FIG. 3 is a graph of the electrical resistance versus % elongation (*i.e.* stress loading) for an embodiment of the electrically conductive elastomeric structure of the present invention;

FIG. 4 is a graph of the electrical resistance versus % elongation for another embodiment of the electrically conductive elastomeric structure of the present invention;

FIG. 5 is a graph of the electrical resistance versus % elongation for yet another embodiment of the electrically conductive elastomeric structure of the present invention; and

FIG. 6 is a flow diagram of the method of the present invention for making an electrically conductive elastomeric structure.

FIG. 7 is a flow diagram of another method of the present invention for making an electrically conductive elastomeric structure.

FIG. 8 is a flow diagram of yet another method of the present invention for making an electrically conductive elastomeric structure.

FIG. 9. Surface of Lycra® fiber coated with Zelec® dispersion based on comparative example 1.

Figure 10. Surface of Lycra® fiber coated with Zelec® dispersion based on example 14.

Figure 11 Surface of Lycra® fiber coated with Zelec® dispersion based on example 15.

### DETAILED DESCRIPTION OF THE INVENTION

In accordance with the present invention, an electrically conductive elastomeric structure has an initial electrical resistance value and an electrical resistance value that varies with elastic stretch and recovery in a predictable manner. The electrically conductive elastomeric structure has an elastomer polymer with electrically conductive particles dispersed therein. The electrically conductive particles are provided in a predetermined concentration. In addition, the electrically conductive elastomeric structure has an elastic stretch and recovery property that at least one of eliminates or substantially limits the hysteresis effect as compared to known electrically conductive elastomeric structures. Further, the elastic stretch and recovery property of the electrically conductive elastomeric structure further provides an electrical resistance that at least one equals or substantially equals the initial resistance value after five elastic stretch and recovery cycles. Moreover, there is control over the function and magnitude of electrical resistance change with elongation during the stretch and recovery cycling.

In general, the form of the electrically conductive structure is a film having a thickness in the range from 5 micrometers (µm) to 400 µm. For example, such films can take the form of a long and narrow flat filament, where the width of the film is on the order of the film thickness and the length is substantially unlimited. In such a case, the film is referred to as a continuous filament. Alternatively, the form of the electrically conductive structure is a spun fiber containing at least 1 filament and a length which is substantially unlimited. Alternatively, the form of the electrically conductive structure is a coating in liquid form. Electrically conductive elastomeric structures within the scope of the present invention include fibers, fabrics and films; and coatings applied to the fibers, fabrics and films.

Preferably, an elastomer is selected from those elastomers referred to as spandex or segmented polyurethane-urea. A particularly preferred spandex is offered under the Lycra® trademark and can be obtained from INVISTA® INCORPORATED, 4417 Lancaster Pike, Wilmington, Delaware 19805. Preferred grades of Gycra® spandex include, but are not limited to: Type T-162C, Type T-902C and Type T-178C.

Examples of electrically conductive particles include, but are not limited to: conductive metals, conductive and semi-conductive metal oxides and salts, carbon based conductive materials, nanoparticles (*e*.*g*. carbon tubes, rods, and wires); and generally, those conducting particles that conduct electrical current based on a "percolation mechanism" in a polymer matrix. A particularly preferred electrically conductive particle is an antimony-doped tin oxide particle sold under the trademark Zelec® ECP, which can be obtained from Milliken Chemical Company of Spartanburg, South Carolina USA. The percolation mechanism is further discussed below.

At low concentrations of electrical conductors within a polymer matrix, the conductor sites of the polymer matrix may form small clusters or may become isolated from their nearest neighbor sites. Two conductor sites belong to the same cluster when connected by a path of nearest neighbor conductor sites. In this case, an electrical current can flow between conductor sites. When electrical conductors in the polymer matrix are isolated, the matrix is an insulator. That is, no conducting path connecting all points in the polymer matrix exists.

In contrast, at larger concentrations of electrical conductors, many conduction paths exist that connect conductor sites in the polymer matrix. In this case, an electrical current can flow and the polymer matrix is a conductor.

At concentrations of electrical conductors in between the extremes of the low concentration and the larger concentration of conductors discussed above, a threshold concentration of electrical conductors exists such that an electrical current can "percolate" in the polymer matrix. As a result of this percolation mechanism, if the concentration of conductors is below the threshold concentration, the polymer matrix is an insulator. If the concentration of conductors is above this threshold concentration, the polymer matrix is a conductor. Preferably, the electrically conductive elastomeric structure of the present invention is provided with electrically conductive particles at a predetermined concentration (*i.e.,* at least at the percolation threshold) such that a three-dimensional network of electrically conductive particles exists (*i*.*e*., in the form of the elastic polymer matrix) in the electrically conductive elastomeric structure that maintains conduction paths in the structure in a manner that provides electrical resistance through the three-dimensional network of the elastic polymer matrix.

In addition, the preferred electrically conductive particle(s) are selected from a group comprising those particles that provide a "low percolation threshold" in the electrically conductive elastomeric structure. The percolation mechanism discussed above is a simple model for a disordered system comprised of sites in an elastic polymer matrix where either a conductor or insulator resides. More specifically, a "low percolation threshold" is characterized by a predetermined ratio of electrically conductive particles-to-elastomer in a weight ratio of less than 0.5:1 and more preferably of less than 0.05:1.

In the particular area of textile-compatibles, it is preferable to have predictable electrical resistance behavior in at least the 10% to about 50% range of elongation. The behavior of the electrical resistance is expressed as the change in resistance per change in unit length (ΔR/ΔL)). It is preferable that the change of the electrical resistance (ΔR) is at least 50% during a change in elongation (ΔL) of 100%. In addition, it is preferable that the material have a predictable and limited hysteresis effect during each elastic stretch and recovery cycle.

In addition, it should be noted that the initial value of the electrical resistance in the un-stretched (i.e., relaxed) state will depend on the intended application and related electronics. In the particular area of textile-compatibles, there is a preference for an initial electrical resistance of less than 1 Mega-Ohms (MΩ) and preferably less than 100 Kilo-Ohms (KΩ). In general, electroconductive elastomer structures prepared under the methods of this invention may have tailored initial resistance and change of electrical resistance per change in unit length. As an example, the resistance in the un-stretched state may range from 1 Kilo-Ohm (KΩ) to 15,000 Giga-Ohms (GΩ). Stretching or deforming the electrically conductive elastomeric structure within a range of 100% elongation typically causes the resistance value to increase by as much as ten (10) orders of magnitude.

In general, electroconductive elastomer structures prepared under the methods of this invention may have a tailored initial resistance and a change of electrical resistance per change in unit length. As an example, the change of the electrical resistance vs. elongation over a loaded cycle can obtain the form of an increasing mathematical function that can include but not limited to a function that can be described as : Log R =a+b*(ΔL/L* 100) (function 1), where a and b are constants describing the initial resistance value and slope of change of the logarithm of electrical resistance vs. elongation. Typically the change of the resistance with elongation is described by the following function: Log R=a+be^{-c(ΔL/L*100)^n} (function 2), where: a is the asymptotic value of the electrical resistance as elongation increases; b is the change in electrical resistance between the initial value and the asymptotic value; and n is the power that determines how fast the resistance approaches the asymptotic value and c is a constant that based on the value of n determines how fast the resistance value increases as elongation increases (typically n≥1 and typically n=2). Typically the graphical function of the resistance change with elongation can be described as a sum of resistance components, R=ΣAᵢR₁, (function 3) where R₁ is described by a function of the type function 2 described above, and Aᵢ are constants. Typically I=1 to 2.

Moreover, as discussed above, the electrically conductive particles of the present invention are provided in the electrically conductive elastomeric structure in a predetermined concentration. This predetermined concentration is expressed as a ratio of the weight of electrically conductive particles-to-elastomer. In a preferred embodiment of the present invention, the electrically conductive elastomeric structure has a predetermined concentration of electrically conductive particles-to-elastomers that is less than 2:1. In addition, the elongation at break of the electrically conductive elastomeric structure is greater than 100%.

In addition, the electrically conductive elastomeric structure has a predictable elastic stretch and recovery property. This elastic stretch and recovery property is **characterized in that** a percentage of elongation within the elastic limit (i.e., at an elongation less than the elongation-at-break) results in a well defined function of electrical resistance vs. elongation. This elastic stretch and recovery property is further **characterized in that** a percentage of elongation within the elastic limit (i.e. at an elongation less than the elongation-at-break) results in substantially no permanent physical deformation and substantially no permanent change in the initial value of electrical resistance.

In addition, the elastic stretch and recovery property is characterized by the electrical resistance of the electrically conductive elastomeric structure returns to a value at least one of equal and substantially equal to the initial electrical resistance value after at least 5 stretch and recovery cycles, wherein the maximum percentage of elongation was in the range of the elastic limit and preferably at least 20% elongation. Preferably substantially equal is defined as an un-stretched resistance value that is on average within the resistance value exhibited to within 0% to 10% elongation range under load, and preferably to within 10% of the initial resistance.

Moreover, the elastic stretch and recovery property is characterized by the hysteresis effect on the value of resistance during stretch (i.e., % elongation under load) and recovery (i.e., % elongation when unloaded) is eliminated or substantially limited (i.e., unloaded resistance value is on average within less than 30% of the loaded resistance) after at least 5 stretch and recovery cycles, wherein the maximum percentage of elongation was in the range of the elastic limit and preferably at least 20%. Preferably substantially limit will correspond to an unloaded resistance value that is on average within 10% of the loaded resistance value.

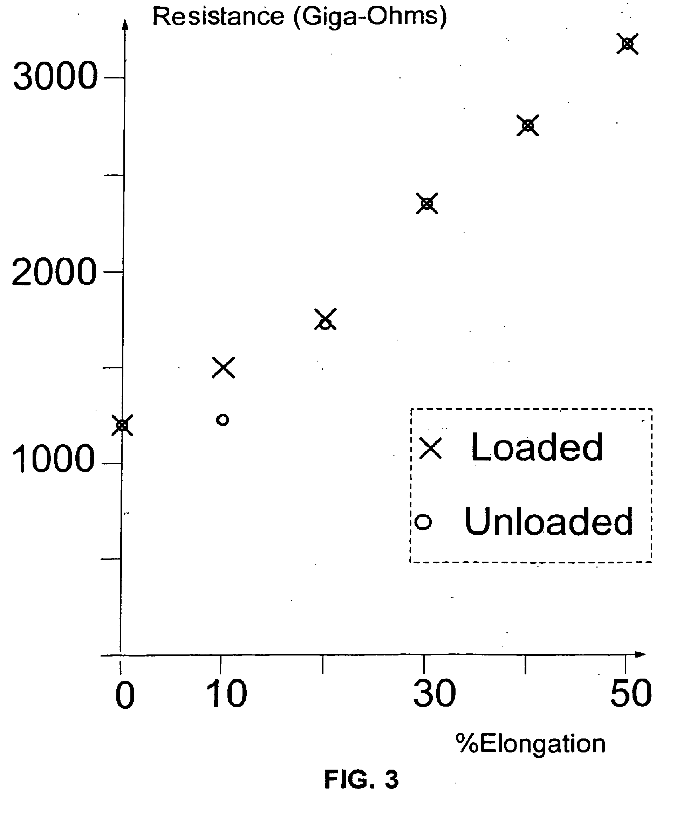

FIG. 3 is a graph that demonstrates some of the characteristics of the elastic stretch and recovery property of the electrically conductive elastomeric structure of the present invention. The particular data shown in this graph is further discussed in Example 6 below. The **"X"** symbols on the graph of FIG. 3 represent the measured resistance in Giga-Ohms at different percentages of elongation during stretch (*i*.*e*., stress under load). The **"O"** symbols on the graph of FIG. 3 represent the measured resistance in Giga-Ohms at different percentages of elongation during recovery (*i.e.,* stress when unloading). The data plotted in Figure 3 is shown in Table 2, Example 6.

As shown in FIG. 3, the electrically conductive elastomeric structure returns to a value substantially equal to the initial electrical resistance at 0% elongation. In addition, FIG. 3 shows that the hysteresis effect is virtually eliminated at the various percentages of elongation in the range from 0% to 50%. This is further illustrated in the data of Table 2/Example 6, which is plotted in FIG. 3, and further discussed in Example 6 below. However, it should be noted that the resistance value under "loaded" conditions (*i.e.,* stretched) and the "unloaded" (*i.e.*, recovery) resistance at 0% elongation are equal or substantially equal to the initial resistance value. In particular, on average, the unloaded resistance is within 10% of the initial resistance. The change of the electrical resistance over the measured elongation range is about 3 times the initial resistance. Therefore, the change in the unloaded resistance value from the initial resistance value is virtually eliminated by the present invention.

Moreover, Table 1 and Table 2 list the values of resistance under "loaded" and "unloaded" conditions at various percentages of elongation, where the percentages range from 0% to 50%. As can be seen from the data of Table 1 and Table 2, the hysteresis effect on the values of resistance are at least one of eliminated or substantially limited (*i.e.,* on average the unloaded resistance is within 30% of the loaded resistance) over the range of % elongation for the stretch and recovery cycle. Therefore, the hysteresis effect is virtually eliminated by the present invention.

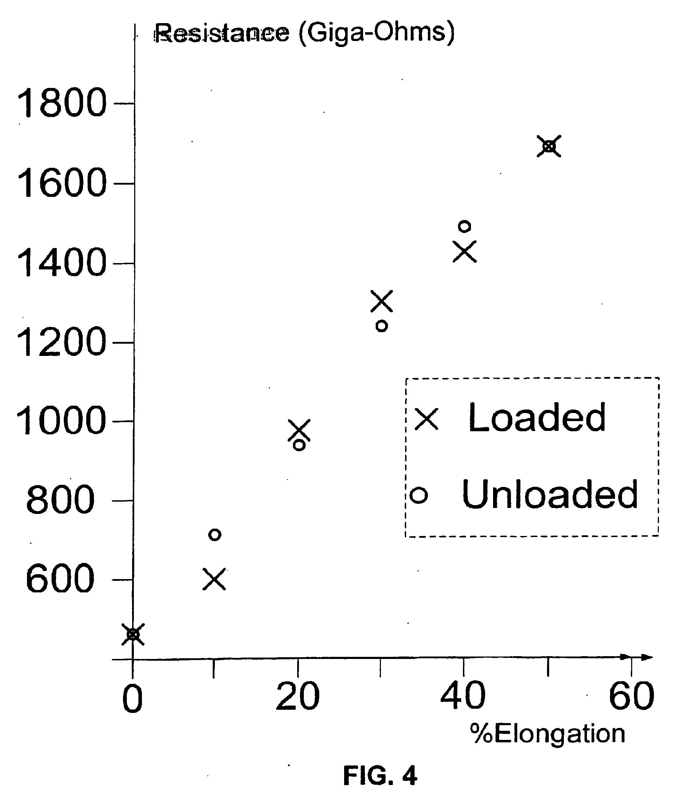

FIG. 4 shows the elastic stretch and recovery property of another embodiment of the electrically conductive elastomeric structure of the present invention. As can be seen in FIG. 4, the unloaded resistance returns to a value substantially equal to the initial electrical resistance at 0% elongation. In addition, FIG. 4 shows that the hysteresis effect is substantially eliminated at the various percentages of elongation in the range from 0% to 50%. This is further illustrated in the data of Table 1/Example 3, which is plotted in the graph of FIG. 4, and further discussed in Example 3 below. However, it should be noted that the resistance value under "loaded" conditions (*i.e.,* stretched) and the "unloaded" (*i.e.,* recovery) resistance at 0% elongation are equal or substantially equal to the initial resistance value. In addition, on average, the "unloaded" resistance is within 10% of the "loaded" resistance. The change of the electrical resistance over the measured elongation range is about 4 times the initial resistance. Therefore, the "unloaded" resistance value is at least one of equal to and substantially equal to the initial resistance value and the hysteresis effect is at least one of eliminated and substantially limited by the present invention.

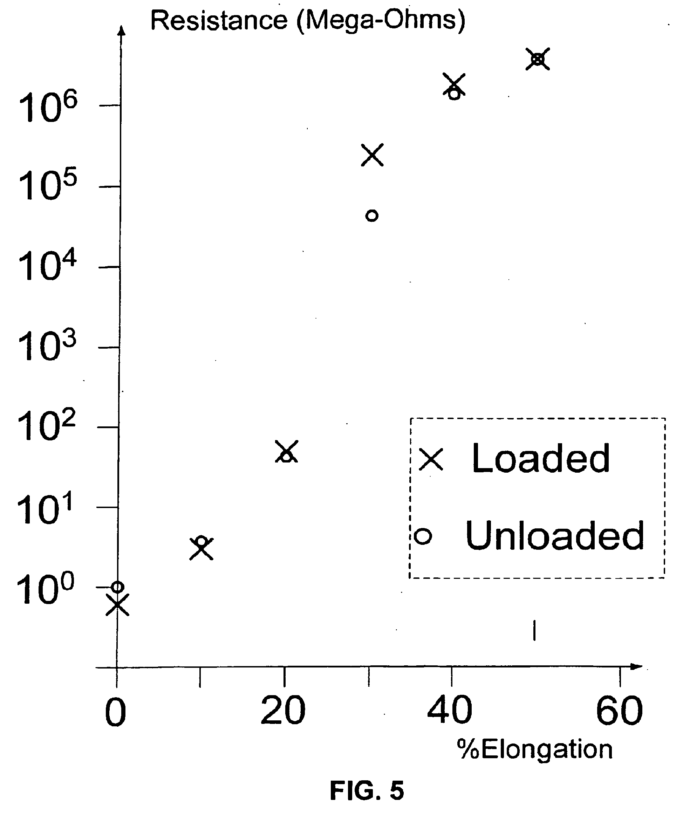

FIG. 5 shows the elastic stretch and recovery property of yet another embodiment of the electrically conductive elastomeric structure of the present invention. As can be seen in FIG. 5, the unloaded resistance returns to a value substantially equal to the initial electrical resistance at 0% elongation. In addition, FIG. 5 shows that the hysteresis effect is substantially eliminated at the various percentages of elongation in the range from 0% to 50%. This is further illustrated in the data of Table 1/Example 5, which is plotted in the graph of FIG. 5 and further discussed in Example 5 below. However, it should be noted that the resistance value under "loaded" conditions (*i*.*e*., stretched) and the "unloaded" (*i*.*e.*, recovery) resistance at 0% elongation is within 30% of the initial resistance value and is within the resistance value expected in the 0% to 10% elongation range. In addition, on average, the "unloaded" resistance is within 20% of the "loaded" resistance. This is particularly important in this Example as the change of resistance in the measured elongation range is significant and is over 6 orders of magnitude. Therefore, the "unloaded" resistance value is substantially equal to the initial resistance value and the hysteresis effect is substantially limited by the present invention.

Preferably, an electrically conductive elastomeric structure is provided wherein the resistance value varies from the initial resistance value over a range of a minimum of 50% change over 100% elongation and up to ten (10) orders of magnitude with elongation up to the elastic limit of the electrically conductive elastomeric structure. Most preferably, an electrically conductive elastomeric structure is provided wherein the resistance varies from an initial resistance values over a range of up to ten (10) orders of magnitude from the initial resistance value with percentages of elongation of up to 100%.

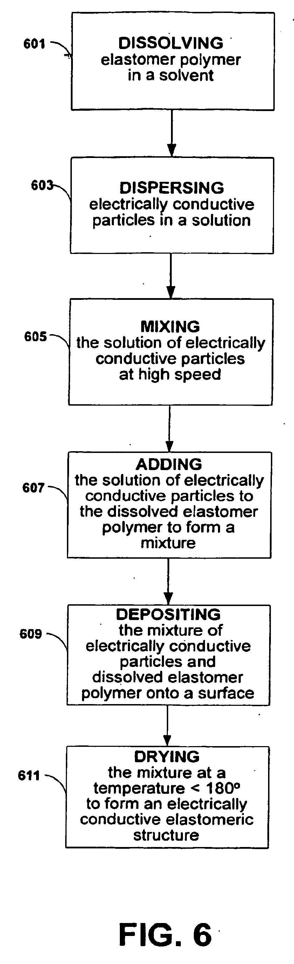

FIG. 6 shows a flow diagram of a method for making an electrically conductive elastomeric structure according to the present invention. In particular, FIG. 6 shows a method for making an electrically conductive elastomeric film, or a coating. In particular, the electrically conductive elastomeric structure of the present invention may be prepared by initially dissolving or dispersing an elastomer polymer in a solvent or a solvent mixture, as indicated in Step **601** of FIG. 6. The elastomer polymer is preferably, but not limited to Lycra® spandex. A solution of Lycra® spandex is obtained by dissolving or dispersing a suitable Lycra® spandex polymer in the solvent environment. The primary solvent is preferably chosen from the list of, but not limited to, N-dimethylacetamide (DMAc), N-Dimethylformamide (DMF), N-methylpyrrolidone (NMP), Water. Secondary solvents are preferably chosen from the list of, but not limited to, 2-butanone, toluene. The concentration of the secondary solvent is preferably less than 50% by volume of the solvent mixture. Further, the solution has a preferred solids concentration of at least 5, and preferably at least 10 weight percent.

In Step **603** of FIG. 6, a dispersion of electrically conductive particles is prepared in a solution. The electrically conductive particles are preferably, but not limited to, Zelec® electrically conductive particles, or single-wall carbon nanotubes. Further, the solution that the particles are dispersed in is preferably chosen from the list of, but not limited to, DMAc, DMF, NMP, 2-butanone, and water. The primary solvent is chosen as to result in a homogeneous non-agglomerated dispersion of the electrically conductive particles and be miscible with the solvent of the elastomer polymer. Furthermore, the solution has a preferred concentration of the primary solvent of the elastomer polymer solution that is about at least 1% by volume of the solvent mixture.

Step **605** of FIG. 6 is the mixing of the weighed electrically conductive particles in the solution at a high speed. As a non-limiting example, the speed of the mixing process of Step **605** may be in the range from 1000 to 11000 turns per minute for a duration of about 15 minutes.

In Step **607** of FIG. 6, the mixed solution of electrically conductive particles is added to the dissolved elastomer polymer to form a mixture of the two materials. In particular, the mixture is made by adding the two materials together with a predetermined ratio of the dispersed electrically conductive particle-to-dissolved elastomer polymer. Alternatively, the electrically conductive particles may be added directly into the solution of the elastomer polymer, thus avoiding Steps **603** and **605.** This is a preferred method when the solution of the elastomer polymer is capable of allowing for a homogeneous non-agglomerating state for the electrically conductive particles.

Step **609** of FIG. 6 is the depositing of the mixture of electrically conductive particles and dissolved elastomer polymer (*e*.*g*., Zelec® and Lycra®, respectively) onto a surface that is preferably, but not limited to a coating paper, a Mylar film, or a fabric. In the case that the surface displays stretch characteristics, the depositing of the mixture onto the surface is preferably applied, but not limited to, the surface while this is under tension, and preferably under a tension of at least 10% stretch. For example, the deposition of the mixture in Step **609** may be performed by using a film applicator that provides a controlled thickness for the wet film. The controlled thickness of the wet film is preferably, but not limited to, the range from 20 mil (0.5 mm) to 100 mil (2.5 mm).

In step **609** of FIG. 6, the wet film is dried in air at a temperature preferably less than 180°C. The dried film forms an electrically conductive elastomeric structure that has the desirable characteristics of:
(1) a well-defined, predictable electrical resistance versus elastic stretch and recovery property over a significant range of applied stresses (*i.e.,* % elongation); and
(2) an electrical resistance with elastic stretch and recovery property that does not depend upon the rate of elongation; the applied force that provides the percentage of elongation; or the number of elastic stretch and recovery cycles.

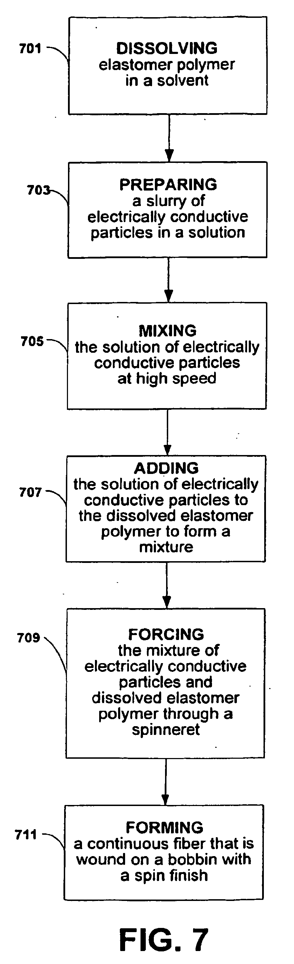

FIG. 7 shows a flow diagram of a method for making an electrically conductive elastomeric structure according to the present invention. In particular, FIG. 7 shows a method for making an electrically conductive elastomeric spun fiber. More specifically, the electrically conductive elastomeric structure of the present invention may be prepared by initially dissolving an elastomer polymer in a solvent, as indicated in Step **701** of FIG. 7. The elastomer polymer is preferably, but not limited to, Lycra® spandex. A solution of Lycra® spandex is obtained by dissolving a suitable Lycra® spandex polymer in the solvent environment. The solvent is preferably chosen from the list of, but not limited to, N-dimethylacetamide (DMAc), N-methylpyrrolidone (NMP). The solution has a preferred solids concentration of at least 15, and preferably at least 20 weight percent.

In Step **703** of FIG. 7, a slurry of electrically conductive particles is prepared in a solution. The electrically conductive particles are preferably, but not limited to, Zelec® electrically conductive particles, or single-wall carbon nanotubes. The slurry of the particles is preferably made by adding the electrically conductive particles into the solution of the elastomer polymer as described in Step **701.** The solution has a preferred concentration of the electrically conductive particles of at least 10% by weight, and preferably of at least 20% by weight. The solution may further contain a solvent that is chosen as to result in a homogeneous non-agglomerated dispersion of the electrically conductive particles and be miscible with the solvent of the elastomer polymer. The solvent may be preferably, but not limited to, 2-butanone, toluene.

Step **705** of FIG. 7 is the mixing of the weighed electrically conductive particles in the solution at a high speed. As a non-limiting example, the speed of the mixing process of Step **705** may be in the range from 1000 to 11000 turns per minute for a duration of about 15 minutes. The mixing process may also include a grinding of the particle slurry.

In Step **707** of FIG. 7, the slurry of electrically conductive particles is added to the dissolved elastomer polymer via spinning header injection to form a mixture of the two materials. In particular, the mixture is made by adding the two materials together with a predetermined ratio of the dispersed electrically conductive particle-to-dissolved elastomer polymer.

Step **709** of FIG. 7 is the forcing the mixture of electrically conductive particles and dissolved elastomer polymer (*e*.*g*., Zelec® and Lycra®, respectively) through a spinneret. For example, the spinning process may be a dry spinning process that leads into the formation of a continuous fiber.

In step **711** of FIG. 7, the fiber is wound on a bobbin and a spin finish may be applied. The fiber may contain at least 1 filament. The fiber forms an electrically conductive elastomeric structure that has the desirable characteristics of:
(1) a well-defined, predictable electrical resistance versus elastic stretch and recovery property over a significant range of applied stresses (*i*.*e*., % elongation); and
(2) an electrical resistance with elastic stretch and recovery property that does not depend upon the rate of elongation; the applied force that provides the percentage of elongation; or the number of elastic stretch and recovery cycles.

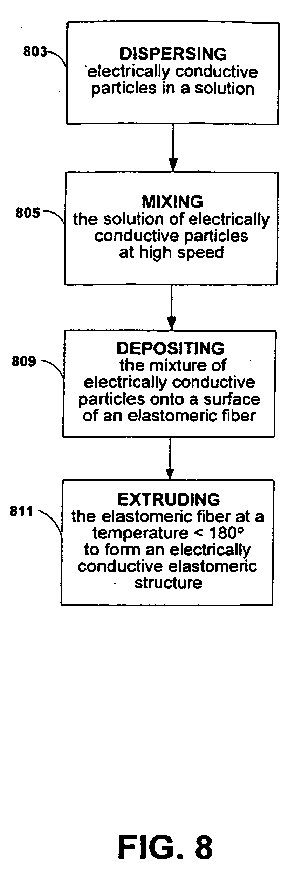

FIG. 8 shows a flow diagram of a method for making an electrically conductive elastomeric structure according to the present invention. In particular, FIG. 8 shows a method for making an electrically conductive elastomeric coated fiber. The elastomeric fiber is preferably, but not limited to, Lycra® spandex.

In Step **803** of FIG.8, a dispersion of electrically conductive particles is prepared in a solution. The electrically conductive particles are preferably, but not limited to, Zelec® electrically conductive particles, or single-wall carbon nanotubes. Further, the solution that the particles are dispersed in is preferably chosen from the list of, but not limited to, 2-butanone, and water. The primary solvent is chosen as to result in a homogeneous non-agglomerated dispersion of the electrically conductive particles and have wetting affinity but not be soluble with the surface of the elastomeric fiber. Furthermore, the solution has a preferred concentration of a good solvent for the elastomeric fiber that is at least about 1% and less than 50% by volume of the solvent mixture.

Step **805** of FIG. 8 is the mixing of the weighed electrically conductive particles in the solution at a high speed. As a non-limiting example, the speed of the mixing process of Step **805** may be in the range from 1000 to 11000 turns per minute for a duration of about 15 minutes.

Step **809** of FIG. 8 is the depositing of the mixture of electrically conductive particles onto the surface of the elastomeric fiber. The depositing of the mixture onto the surface is preferably applied, but not limited to, the surface while this is under tension, and preferably under a tension of at least 10% stretch. For example, the deposition of the mixture in Step **809** may be performed by using a fluid pump applicator accompanied with a knife applicator that provides a controlled thickness for the wet coating film. This application may be made while the fiber is driven between rollers at a preferred speed so as to provide a controlled tension.

In step **811** of FIG. 8, the wet fiber is driven through an online heated oven where it is dried at a temperature preferably less than 180°C. Upon exit from the oven the dried fiber is then wound on a bobbin. The coated fiber forms an electrically conductive elastomeric structure that has the desirable characteristics of:
(1) a well-defined, predictable electrical resistance versus elastic stretch and recovery property over a significant range of applied stresses (*i.e.,* % elongation); and
(2) an electrical resistance with elastic stretch and recovery property that does not depend upon the rate of elongation; the applied force that provides the percentage of elongation; or the number of elastic stretch and recovery cycles

According to an embodiment of the invention the electrically conductive particles are added, in a predetermined amount, to an elastomer polymer which is further processed into filaments. The process of making filaments modified with electrically conductive particles is selectable from among wet spinning, dry spinning and reaction spinning process known for the manufacture of spandex filaments. Herein incorporated by reference, the disclosure of U.S. patent number 6,623,585 assigned to DuPont Tory Co. Ltd. provides elastomer polymers and methods for spinning spandex filaments useful in the practice of the instant inventions.

In a generally practiced method of spinning, the electrically conductive particles are added to the elastomer polymer, e.g. a poly(urethane-urea) polymer which is a long chain synthetic polymer comprised of at least 85% by weight of a segmented polyurethane. Such poly(urethane-urea) polymers are made by forming a prepolymer from a polymeric diol and a diisocyanate, and reacting this prepolymer ("capped glycol") with a diamine in a solvent. Suitable solvents include dimethylacetamide (DMAc), dimethylformamide, N-methylpyrrolidone, and the like. This "prepolymer method" is preferred when the chain extender is a diamine.

Alternatively, it is known to use as the chain extender a diol and to melt polymerize. Reaction of all ingredients can also be carried out in solution for diamine- and diolextended polymers. The spinning solution may be prepared from one type of polyurethane or two or more types of polyurethane. As practiced in the art, the polymer solution is forced under pressure through a spinneret plate having one or more orifices. Each orifice of the spinneret corresponds to a single filament. The single filament, or plurality of filaments, extruded from the spinneret enters a column where polymer solvent is evaporated from the freshly formed the filament.

The filament formed according to the process discussed above is one having an electrically conductive elastomeric structure. Such filaments are desirable for their characteristics of:
(1) having a well-defined, predictable electrical resistance versus elastic stretch and recovery property over a wide range of applied stresses (*i.e.,* % elongation); and
(2) having an electrical resistance changing with elastic stretch and recovery and not dependent upon the rate of elongation; the applied force that providing the elongation; or the number of elastic stretch and recovery cycles.

The examples below are provided as evidence that the desirable characteristics discussed above are present in the electrically conductive elastomeric structures and methods of the present invention.

### TEST METHODS

Measurement of Conductivity of Films

Each film sample to be tested was cut in a strip measuring 2 cm x 10 cm. Using appropriate tweezers the film was placed on an INSTRON dynamometer, which can be obtained from the Instron Corporation, Headquarters, 100 Royal Street, Canton, MA, 02021, USA, using the flat jaws for soft films. The initial gauge length was set to 5 cm for mechanical property measurements and to 1 cm for electrical property measurements.

A Super Megohmeter Model RM 170, which can be obtained from Avo. N. 250 from AVO Ltd. England, was used to measure electrical resistance. The Super Megohmeter Model RM 170 is capable of measuring resistance in the range between 10 and 500 Volts and in values from 0.35*(V/100) KiloOhms to 2000*(V/100) Giga Ohms. In this work 110 Volts was selected.

A special construction of the electrodes was made to allow for a stable and reproducible position of the electrodes by reference to the test film. The distance between the electrodes was chosen to be 1 cm. Using this configuration it is then possible to measure in a controlled way the resistance of the films during both the stretch and recovery portions of a cycle.

In addition, computer control of the INSTRON allowed the film to be stretched to the desired elongation with the electrodes positioned on the surface of the film and the resistance value was observed using the Super Megohmeter Model RM 170. In the case of the elongation cycling experiments, each film sample was cycled 5 times to 50% elongation and the resistance measured at each 10% change in elongation for both stretch and recovery cycles.

### EXAMPLES

Example 1 of the Present Invention

The Lycra® spandex was prepared by dissolving Lycra® T-162C polymer of 44 dtex in DMAc solvent at a concentration of 10 wt%. A dispersion of electrically conductive particles (e.g., Zelec® electrically conductive particles (ECP)), which can be obtained from Milliken Chemical Company, Spartanburg, South Carolina, USA, was prepared based on the following recipe: 50ml of butanone, 5ml of DMAc and 15g of Zelec® powder. This dispersion was mixed with a mixer at 11000 turns per minute for 15 minutes. The Zelec® dispersion solution was then mixed with the dissolved Lycra® so that the ratio of Zelec® particles to Lycra® was 0.25:1 (wt/wt). This mixture was stirred with a magnetic stirrer to ensure good homogeneity. A wet film was made by depositing this Lycra® and Zelec® mixture onto a coating paper using a film applicator to a controlled wet film thickness of 20 mil (0.5 mm). The wet film was dried under a hood at laboratory temperature and pressure conditions overnight. The dry thickness of the film was measured as 45 micrometers (µm). This film showed a high resistance in the un-stretched state of 1050 GΩ. Stretching this film within the 100% elongation range caused an increase in the resistance over the value of initial resistance of about 4 times.

As shown in Table 1, on average, the unloaded resistance of the film returned to within 10% of the loaded resistance after cycling the film to 50% elongation during the elastic stretch and recovery cycle. In addition, the unloaded resistance of the film returned to within 10% of the initial resistance value after the recovery portion of the cycle (*i.e.,* after returning to 0% elongation). This result shows that, even at levels below the percolation threshold, the film of the present invention has strain-gauge behavior with an elastic response in terms of the resistance values. Hence, the film of the present invention can be used for applications where the strain-gauge effect is of interest.

Example 2 of the Present Invention

The Lycra® and Zelec® mixture of Example I was used to deposit a wet film with a thickness of 50 mil (1.3 mm). The dry film thickness was measured as 180 µm. It was observed that the initial resistance value of the film was 330 GΩ. This value is somewhat lower than the initial resistance value of the thinner film (*i.e.,* 1050 GΩ @ 45 µm) of Example 1. The resistance of the film in this example showed a total increase of about 4 times within the 100% elongation range. As shown in Table 1, on average, the unloaded resistance returned to within 20% of the loaded resistance after cycling to 50% elongation during the elastic stretch and recovery cycles. In addition, the unloaded resistance returned is within 10% the initial resistance value at 0% elongation after the recovery portion of the cycle.

Example 3 of the Present Invention

The Lycra® and Zelec® mixture of this example was prepared similar to that in Example 1. However, a different ratio of Zelec®-to-Lycra® of 0.5:1 (wt/wt) was used for Example 3. A wet film was deposited with a wet film thickness of 20 mil (0.5 mm). After drying, the dry film thickness was measured at 60 µm. It was observed that the initial resistance value of the un-stretched film was 465 GΩ, and thus, lower than that of the film in Example 1. Though the films in both examples had the same wet film thickness (*i.e.,* 20 mil), the film of Example 3 has a Zelec®-to-Lycra® ratio that is two (2) times higher than the film of Example 1. The film in Example 3 also had a much higher increase in the resistance value versus % elongation as compared to Example 1. In particular, the resistance reached forty (40) times that of the un-stretched film at 100% elongation. As shown in Table 1, on average, the unloaded resistance returned to within 10% of the loaded resistance after 50% elongation during elastic stretch and recovery cycles. In addition, the unloaded resistance returned to the initial resistance value after the recovery portion of the cycle.

Example 4 of the Present Invention

The Lycra® and Zelec® mixture of Example 3 was deposited to a wet film thickness of 50 mil (1.3 mm). The dry film thickness was measured to be 210 µm. In this example, a dramatic reduction of the surface film resistance was observed in the un-stretched state (*i.e.,* 0.017 GΩ) as compared to the thinner film (i.e., 20 mil) of Example 3. Such a dramatic reduction in the surface film resistance represents a change (*i*.*e*., 10⁴ in powers of 10) of over four (4) orders of magnitude. As this film was stretched, a dramatic increase (*i*.*e*., approximately 2000 times) in the resistance value versus % elongation was observed within the 0% to 30% elongation range. Above this elongation range, the film resistance continued to increase, but with a smaller change in the slope of the resistance. As shown in Table 1, in the elongation range from 30% - 100%, this film showed behavior comparable to the thinner film (*i*.*e.*, 20 mil) of Example 3. The measured resistance of this film represents the resistance at the surface of the film.

It is surprising to observe the effect of film thickness on the film surface resistance at the same conditions of Lycra® polymer and Zelec® particle concentration. It is believed this observation indicates differences in the distribution of Zelec® particles within the film structure. At a larger film thickness, it is believed, the Zelec® particles are structured to form more contact points. More contact points lower the initial resistance value of the film. It is also very surprising that although, as discussed above, there is a dramatic change in the resistance versus % elongation, the elastic stretch and recovery cycling of the film has a limited hysteresis effect in the resistance between stretch and recovery cycles. As shown in Table 1, on average, the unloaded resistance returned to within 10% of the loaded resistance after 50% elongation during elastic stretch and recovery cycles. In addition, the unloaded resistance of the film returned to within 20% of the initial resistance after the recovery cycle and to within the resistance value expected in the 0% to 10% elongation range. These results indicate a highly elastic performance in terms of electrical resistance for this example of the present invention.

Example 5 of the Present Invention

A film similar to the film of Example 1 was produced in Example 5. However, the starting Lycra® solution in DMAc had 15wt% concentration and the ratio of Zelec®-to-Lycra® was 1:1 (wt/wt) for Example 5. The dry film thickness was 120 µm. The film showed a further reduction in initial resistance value as compared to invention of Examples 1, 2, 3 and 4, which have smaller ratios of electrically conductive particles-to-elastomer. In addition, the resistance of the film in Example 5 changed dramatically with stretching. Up to about 40% elongation, this film displayed a change in resistance of more than seven (7) orders of magnitude, as shown in Table 1. The loaded resistance value continued to increase, but with a smaller slope in the resistance, up to 100% elongation. Nevertheless, even at this high loading of the Zelec®-to-Lycra®, this film displayed a very consistent and wide dynamic range of resistance change during the elastic stretch and recovery cycles. As shown in Table 1, on average, the unloaded resistance returned to within 20% of the loaded resistance after 50% elongation during elastic stretch and recovery cycles. In addition, the unloaded resistance returned to within 30% of the initial resistance value and to within the resistance value expected in the 0% to 10% elongation range after the recovery portion of the cycle.

Example 6 of the Present Invention

A film similar to the film of Example 1 was produced in Example 6. However, the Lycra® grade was altered for Example 6. The selected Lycra® grade was Type T-902C, which differs from Type T-162C primarily in the soft segment chemistry and molecular weight. This Lycra® grade has longer soft segments and provides a higher elastomer elongation range. The dry film thickness was 50 µm. This film showed a behavior very similar to that of Example I but displayed a somewhat larger increase in resistance over the same elongation range. As shown in Table 2, on average, the unloaded resistance returned to the loaded resistance after 50% elongation during elastic stretch and recovery cycles. In addition, the unloaded resistance returned to the initial resistance value after the recovery portion of the cycle.

Example 7 of the Present Invention

A film similar to the film of Example 2 was produced in Example 7. However, Lycra® T-902C was used in Example 7. The dry film thickness was 180 µm. This film showed similar behavior to the thinner film (i.e., 50 µm dry film thickness) of Example 6 but with a slightly higher resistance with elongation. As shown in Table 2, on average, the unloaded resistance returned to within 10% of the loaded resistance after 50% elongation during elastic stretch and recovery cycles. In addition, the unloaded resistance returned to within 10% of the initial resistance value after the recovery portion of the cycle.

Example 8 of the Present Invention

A film similar to the film of Example 3 was produced in Example 8. However, Lycra® T-902C was used in Example 8. The dry film thickness was 60 µm. The film showed a significantly lower initial resistance of 0.14 GΩ, as compared to the 462 GΩ of Example 3. A large slope in resistance versus % elongation characteristic was observed in the elongation range from 0% to 20%. Despite such a dramatic change, the film shows a limited hysteresis effect and substantially returned to the initial resistance value. As shown in Table 2, on average, the unloaded resistance returned to within 20% of the loaded resistance after 50% elongation during elastic stretch and recovery cycles. In addition, the unloaded resistance returned to within 25% of the initial resistance value after the recovery portion of the cycle and to within the resistance value expected in the 0% to 10% elongation range.

Example 9 of the Present Invention

A Lycra® and Zelec® mixture was made by adding Zelec® directly into the Lycra® solution prepared according to Example 1. That is, the ratio of Zelec®-to-Lycra® T-902C was controlled to be 1:1 (wt/wt). The wet film thickness applied was 20 mil (0.5mm). The dry film thickness measured was 90 µm. This film exhibited a significantly lower initial resistance (i.e., 0.40 MΩ), as compared with Examples 6, 7 and 8, which were based on the same polymer but a lower Zelec® concentration. The initial resistance of the film of Example 9 was of the same order of magnitude as that observed for Lycra® T-162C polymer at the same Zelec® particle concentration in Example 5 (i.e., 0.77 MΩ). However, the extreme transition in resistance in the range 0% to 50% elongation observed in Example 5 is not present in Example 9, which presents a slower increase of resistance over elongation. As shown in Table 2, on average, the unloaded resistance returned to within 10% of the loaded resistance after 50% elongation during elastic stretch and recovery cycles. In addition, the unloaded resistance returned to within 10% of the initial resistance value after the recovery portion of the cycle.

Example 10 of the Present Invention

A film similar to the film of Example 9 was produced in Example 10. However, the dry film thickness was measured at 210 µm to 240 µm. The resistance versus % elongation behavior of this film was similar to that of the thinner film (i.e., 90 µm) of Example 9. As shown in Table 2, on average, the unloaded resistance returned to within 15% of the loaded resistance after 50% elongation during elastic stretch and recovery cycles. In addition, the unloaded resistance returned to within 15% of the initial resistance value after the recovery portion of the cycle and to within the resistance value expected in the 0% to 10% elongation range.

Example 11 of the Present Invention

A film similar to the film of Example 1 was produced in Example 11. However, a different ratio of Zelec®-to-Lycra® of 1:1 (wt/wt) was used for Example 11. The dry film thickness measured for this film was 60 µm. The resistance versus % elongation behavior of this film for the 1^{st} load cycle up to 100% elongation is shown in Table 3. As shown in Table 3, the initial resistance at 0% elongation was 220 KΩ, which is significantly lower than the resistance of the films of Examples 1 and 3 at lower Zelec® concentration. This film showed a sharp increase in resistance in the elongation range of 40% to 70% elongation.

Example 12 of the Present Invention

A film similar to the film of Example 11 was produced in Example 12. However, the dispersion of electrically conductive particles Zelec® had a different recipe as follows: 50ml of butanone, and 15g of Zelec® powder. That is this recipe did not include any DMAc solvent that is the principle solvent of the Lycra® polymer solution. The resistance versus % elongation behavior of this film for the 1^{st} load cycle up to 100% elongation is shown in Table 3. As shown in Table 3, the initial resistance at 0% elongation was 176 KΩ, which is of the same magnitude as the resistance of the film of Example 11. However, this film showed a sharp increase in resistance in the elongation range of 10% to 30% elongation, which demonstrates a shift in the resistance transition towards a significantly lower elongation range compared to Example 11. These results demonstrate the importance of the choice of solvents between the dispersion of the electrically conductive particles and the elastomer solution in determining the graphical function of electrical resistance vs elongation. Under the same conditions, incorporation of the main solvent of the elastomer polymer solution into the dispersion of the electrically conductive particles allows for a better compatibility between the polymer and electrically conductive particles thus favoring an extended connection network between the electrically conductive particles.

Example 13 of the Present Invention

A film similar to the film of Example 12 was produced in Example 13. However, the Lycra® grade was altered in Example 13. The selected Lycra® grade was type T-178C, which differs from Type T-162C primarily in the chemistry, Type T-178C being a segmented polyurethane, while type T-162C being a segmented polyurethane-urea. The resistance versus % elongation behavior of this film for the 1^{st} load cycle up to 100% elongation is shown in Table 3. As shown in Table 3, the initial resistance at 0% elongation was 54 KΩ, which is lower than the resistance of the film of Example 12. However, this film showed a sharp increase in resistance in the elongation range of 40% to 70% elongation, above which the film broke. This demonstrates a shift in the resistance transition towards a significantly higher elongation range compared to Example 12. These results demonstrate the importance of the elastomer chemistry in determining the graphical function of electrical resistance vs elongation. Under the same conditions, simple polyurethane type of chemistry allows the variation of electrical resistance over a more extended elongation range compared to the polyurethane-urea type of chemistry.

Comparative Example 1 of the Present Invention

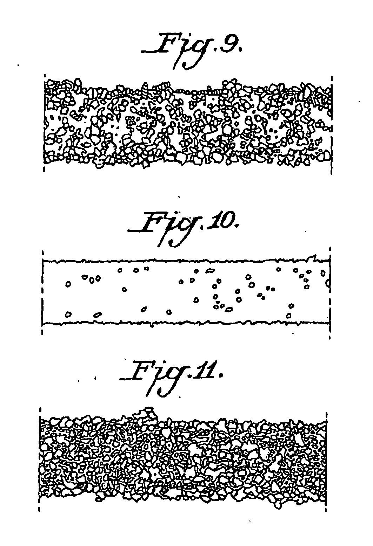

A dispersion of electrically conductive particles, Zelec®, was prepared based on the following recipe: 50ml of methanol, 5ml of DMAc and 15g of Zelec® powder. This dispersion was mixed with a mixer at 11000 turns per minute for 15 minutes. The Zelec® dispersion was then applied onto the surface of a Lycra® fiber that was retained under 100% stretch. The Lycra® was of Type T-136C, 22dtex mono-filament fiber. After coating, the coated fiber was let relax to 0% stretch and dried in a heated oven at 180°C for 15 minutes. As can be seen in FIG. 9, the choice of the main dispersion solvent, methanol in this case, results in aggregation of the Zelec® particles as applied on the fiber surface which aggregates do not form a percolation network. Such aggregation does not allow for a uniform deposition of the particles onto the fiber and therefore does not allow for the use of this fiber as a variable resistance material.

Example 14 of the Present Invention

A dispersion of electrically conductive particles, Zelec®, was prepared and applied onto the surface of a Lycra® fiber as in Comparative Example 1. However it was based on the following recipe: 50ml of 2-butanone, 5ml of DMAc and 15g of Zelec® powder. As can be seen in FIG. 10, this method produces a substantially uniform dispersion of the Zelec® particles as applied onto the fiber surface, which is significantly more uniform compared to the Comparative Example 1. As can be seen in Table 3, this fiber produces a reproducible change of electrical resistance with elongation and therefore can be used as a variable resistance fiber. It can be appreciated that the difference of the main dispersion solvent, between the Comparative Example 1 and Example 14 can lead to the creation of a percolation network between the electrically conductive particles which is created on the surface of the fiber, and therefore lead to a significant advance in the applications of the elastomer fiber as a variable resistance material.

Example 15 of the Present Invention

A dispersion of electrically conductive particles, Zelec®, was prepared and applied onto the surface ofa Lycra® fiber as in Example 14. However it was applied while the Lycra® fiber was in the unstretched state (i.e. 0% stretch). As can be seen in FIG. 11, this method produces aggregates of Zelec® particles onto the fiber surface that create a nonuniform surface as compared to the Example 14. It can be appreciated that the difference of the method application of the dispersion of the electrically conductive particles onto a solid surface, has a significant importance in the creation of a uniform coated surface and percolation network. As can be seen from Table 3, the observed behavior leads to an increased initial resistance, and a very sharp increase in electrical resistance in the low elongation range (10% to 20% elongation) compared to the Example 14.

Example 16 of the Present Invention

The film of Example 9 of the Present Invention was measured with a LCR meter type Escort ELC-131D. The initial distance between the electrodes was set to 1cm and this distance was increasing in proportion to the stretch applied. As shown in Table 4, connection of the electrodes to this film displayed a surprisingly high inductance at the low frequency range of 120Hz. It is also very surprising that the inductance value of the film changes significantly with stretch and in fact it increases with increasing stretch. In particular, at 120 Hz the change of inductance over 100% elongation is evaluated to over 200 times the initial inductance value. At increased frequency of 1KHz the inductance is significantly reduced, however it still presents a significant increase with stretch. These results demonstrate the applicability of the electrically conductive elastomeric structure of this Invention as a variable inductance material in parallel to the variable resistance behavior as discussed above.

Example 17 of the Present Invention

The film of Example 10 of the Present Invention was measured with a LCR meter type Escort ELC-131D similar to the method applied in Example 16 of the Invention. As shown in Table 4 of the Present Invention this film displayed a surprisingly high inductance and a variable inductance behavior according to the observations made in Example 16. By comparing the films of Examples 16 and 17, the main difference lying in the thickness of the film. From Table 4 it is observed that the film of Example 17 having a larger thickness displays in general lower inductance values and a smaller change in inductance over the same elongation range compared to the thinner film of Example 16. Similar observations as for the inductance were made before for the variable resistance behavior between these 2 films as shown in Table 2.

Example 18 of the Present Invention

The film of Example 5 of the Present Invention was measured with a LCR meter type Escort ELC-131D similar to the method applied in Example 16 of the Invention. As shown in Table 4 of the Present Invention this film displayed a surprisingly high inductance and a variable inductance behavior according to the observations made in Examples 16 and 17. By comparing Examples 16 and 18, it is observed that Example 18 demonstrates significantly higher inductance values. It was discussed above that this film also demonstrated a sharper increase in resistance vs elongation compared to the film of Example 18.

Example 19 of the Present Invention

The film of Example 8 of the Present Invention was measured with a LCR meter type Escort ELC-131D similar to the method applied in Example 16 of the Invention. As shown in Table 4 of the Present Invention this film displayed a surprisingly high inductance and a variable inductance behavior according to the observations made in Examples 16, 17 and 18. However, it is observed that this film exhibits the highest inductance values compared to any of the Examples 16, 17 and 18. Observation of the variable resistance behavior of this film from Table 2 indicates that this film indeed exhibits the highest electrical resistance among Examples 16, 17 and 18. These results indicate that electrically conductive elastomeric structures of the Present Invention can induce high inductance characteristics as well as inductance which varies with elongation when connected to an inductive circuit. This is also justified in the electrically conductive elastomeric structures which exhibit weak percolation network by both weak percolation networks due to the concentration of the electrically conductive particles vis a vis the percolation threshold, as well as weak percolation networks due to an applied stretch that tends to separation of the electrically conductive particles. It is observed that in all examples and frequencies studied the inductive reactance is significantly lower compared to the electrical resistance.

Potential applications of the material and structures of the present invention that can be based on the unique variable resistance performance can be found in: bio-monitoring applications (e.g., limb bending, respiration, heart rate); wearable medical devices based on respiratory inductive plethysmography; switches, controls (for example on-off controls, analog-log domain); physical therapy; sensors (for example position sensors, sensors for motion and posture awareness that can be used in intelligent interactive communications, safety, sports, rehabilitation, preventive medicine or bio-monitoring applications, pressure sensors); effect triggering (toys, embedded electronic device, light, sound); feedback device, connectors and interconnects. Furthermore, the materials and structures of this invention can be used in applications that are based on variable inductance characteristics, for example, wearable medical devices based on respiratory inductive plethysmography, inductive loop detectors, variable transformers, power, antennas, frequency filters.

**Table 1. Change of resistance during cycling tests for Examples 1-5.**

| Percent Elongation 5^{th} cycle to 50% elongation | Example 1 Resistance | | Example 2 Resistance | | Example 3 Resistance | | Example 4 Resistance | | Example 5 Resistance | |
|---|---|---|---|---|---|---|---|---|---|---|
| | (Giga-Ohms) | | (Giga-Ohms) | | (Giga-Ohms) | | (Giga-Ohms) | | (Mega-Ohms) | |
| | Load | Unload | Load | Unload | Load | Unload | Load | Unload | Load | Unload |
| 0 | 1050 | 1100 | 330 | 350 | 462 | 462 | 0.017 | 0.020 | 0.77 | 0.99 |
| 10 | 1170 | 1230 | 370 | 420 | 715 | 605 | 0.028 | 0.044 | 4.95 | 5.28 |
| 20 | 1300 | 1390 | 420 | 510 | 935 | 990 | 3.3 | 3.52 | 71.5 | 60.5 |
| 30 | 1650 | 1560 | 460 | 550 | 1232 | 1298 | 935 | 880 | 3.3E5 | 6.6E4 |
| 40 | 1760 | 1710 | 550 | 660 | 1496 | 1408 | 1540 | 1540 | 2.2E6 | 2.0E6 |
| 50 | 1870 | 1870 | 720 | 720 | 1694 | 1694 | 2640 | 2640 | 5.5E6 | 5.5E6 |

**Table 2. Change of resistance during cycling tests for Examples 6-10.**

| Percent Elongation 5^{th} cycle to 50% elongation | Example 6 Resistance | | Example 7 Resistance | | Example 8 Resistance | | Example 9 Resistance | | Example10 Resistance | |
|---|---|---|---|---|---|---|---|---|---|---|
| | (Giga-Ohms) | | (Giga-Ohms) | | (Giga-Ohms) | | (Mega-Ohms) | | (Mega-Ohms) | |
| | Load | Unload | Load | Unload | Load | Unload | Load | Unload | Load | Unload |
| 0 | 1190 | 1190 | 12800 | 13200 | 0.14 | 0.17 | 0.40 | 0.44 | 0.15 | 0.17 |
| 10 | 1500 | 1230 | 16700 | 17600 | 770 | 990 | 0.88 | 0.77 | 0.24 | 0.28 |
| 20 | 1760 | 1720 | 18700 | 21500 | 3080 | 2420 | 2.31 | 2.15 | 0.61 | 0.72 |
| 30 | 2310 | 2310 | 23100 | 25300 | 3740 | 4180 | 7.15 | 7.7 | 1.65 | 1.72 |
| 40 | 2750 | 2750 | 28100 | 30300 | 8250 | 8250 | 35.2 | 34.7 | 7.15 | 7.7 |
| 50 | 3190 | 3190 | 34100 | 34100 | 12100 | 12100 | 176 | 176 | 49.5 | 49.5 |

**Table 3. Change of resistance with elongation for Examples 11-15.**

| Percent Elongation 1^{st} cycle to 100% elongation | Example 11 Resistance | Example 12 Resistance | Example 13 Resistance | Example 14 Resistance | Example 15 Resistance |
|---|---|---|---|---|---|
| | (Kilo-Ohms) | (Kilo-Ohms) | (Kilo-Ohms) | (Mega-Ohms) | (Mega-Ohms) |
| 0 | 220 | 176 | 54 | 99 | 440 |
| 10 | 660 | 4180 | 198 | | 11000 |
| 20 | 2860 | 1.44E+06 | 1045 | | 330000 |
| 25 | | | | 6600 | 11E+06 |
| 30 | 2.97E+04 | 2.75E+10 | 1342 | | |
| 40 | 3.85E+04 | 2.2E+11 | 4400 | | |
| 50 | 9.90E+06 | | 4.73E+04 | 60500 | |
| 60 | 2.97E+08 | | 1.54E+05 | | |
| 70 | 8.80E+08 | | 1.76E+08 | | |
| 80 | 1.21 E+09 | | | | |
| 90 | 2.20E+09 | | | | |
| 100 | 4.40E+09 | | | 275000 | |

**Table 4. Change of inductance with elongation for Examples 16 - 19.**

| Percent Elongation 1^{st} cycle to 100% elongation | Example 16 | | Example 17 | | Example 18 | | Example 19 | |
|---|---|---|---|---|---|---|---|---|
| | Inductance | | Inductance | | Inductance | | Inductance | |
| | 120Hz | 1KHz | 120Hz | 1KHz | 120Hz | 1KHz | 120Hz | 1KHz |
| | (Henry) | | (Henry) | | (Henry) | | (Henry) | |
| 0 | 1.4 | | 0.7 | 0.02 | 9.5 | 1.2 | 8465 | 41.9 |
| 20 | 2.7 | 0.2 | 0.2 | | 90.1 | 9.1 | | 436.8 |
| 40 | 7.8 | 0.9 | 1.0 | 0.09 | 114 | 9.2 | | |
| 60 | 10.6 | 5.5 | 2.9 | 0.3 | 1300 | 64 | | |
| 80 | 150 | 41.5 | 7.6 | 0.8 | 6680 | 49 | | |
| 100 | 308 | 145 | | 0.9 | | | | |

**Table 5. Change of inductive reactance (X_{L}=2πfL) with elongation for Examples 16 - 19.**

| Percent Elongation 1^{st} cycle to 100% elongation | Example 16 Inductive Reactance 120Hz 1KHz | | Example 17 Inductive Reactance 120Hz 1KHz | | Example 18 Inductive Reactance 120Hz 1KHz | | Example 19 Inductive Reactance 120Hz 1KHz | |
|---|---|---|---|---|---|---|---|---|
| | (Kilo-Ohms) | | (Kilo-Ohms) | | (Kilo-Ohms) | | (Kilo-Ohms) | |
| 0 | 1.1 | | 0.5 | 0.1 | 7.1 | 7.5 | 6518 | 263 |
| 20 | 2.0 | 1.3 | | | 68 | 57 | 2746 | |
| 40 | 5.9 | 5.7 | 0.8 | 0.6 | 86 | 58 | | |
| 60 | 8.0 | 35 | 2.2 | 1.9 | 980 | 402 | | |
| 80 | 113 | 261 | 5.7 | 5.0 | 5036 | 308 | | |
| 100 | 232 | 911 | 5.7 | | | | | |

## Claims

1. A fiber or fabric formed of an electrically conductive elastomeric structure having an initial electrical resistance and an electrical resistance that varies with elongation, the elastomeric structure comprising:
an elastomer polymer; and
antimony-doped tin oxide electrically conductive particles or single-wall carbon nanotubes dispersed in the elastomer polymer, wherein a predetermined formula of the electrically conductive particles are mixed in a predetermined concentration with a predetermined formula of the elastomer polymer to provide the electrically conductive elastomeric structure with an elastic stretch and recovery property that eliminates or substantially limits a hysteresis effect on the electrical resistance.

2. A fiber or fabric having a coating of an electrically conductive elastomeric structure having an initial electrical resistance and an electrical resistance that varies with elongation, the elastomeric structure comprising:
an elastomer polymer, and
antimony-doped tin oxide electrically conductive particles or single-wall carbon nanotubes dispersed in the elastomer polymer, wherein a predetermined formula of the electrically conductive particles are mixed in a predetermined concentration with a predetermined formula of the elastomer polymer to provide the electrically conductive elastomeric structure with an elastic stretch and recovery property that eliminates or substantially limits a hysteresis effect on the electrical resistance.

3. The fiber or fabric of claims 1 or 2, wherein the elastic stretch and recovery property further provides an electrical resistance that at least one of equals and substantially equals the initial resistance value after at least five elastic stretch and recovery cycles.

4. The fiber or fabric of claim 3, wherein the elastic stretch and recovery property further provides an electrical resistance that at least one of equals and substantially equals the unstretched resistance value during a cycle of elastic stretch and recovery after at least five elastic stretch and recovery cycles.

5. The fiber or fabric of claim 4, wherein the elastic stretch and recovery property further provides that substantially no permanent physical deformation and substantially no permanent change in the initial electrical resistance results from an elongation within an elastic limit of the elastomer polymer.

6. The fiber or fabric of claim 5, wherein the predetermined concentration is expressed as a weight ratio of the electrically conductive particles-to-elastomer polymer.

7. The fiber or fabric of claim 6, wherein the predetermined concentration is less than 2: 1 and the electrically conductive elastomeric structure has an elongation-at-break of greater than 100%.

8. The fiber or fabric of claim 7, wherein the electrical resistance varies over a range of at least 50% and up to ten (10) orders of magnitude with an elongation up to the elastic limit of the electrically conductive elastomeric structure.

9. The fiber or fabric of claim 8, wherein the electrical resistance varies over a range of at least 50% and up to ten (10) orders of magnitude from the initial electrical resistance with an elongation up to 100% elongation.

10. The fiber or fabric of claim 9, wherein the electrical resistance shows a tailored function with elongation, such that the transition from a lowest electrical resistance to a highest electrical resistance can occur at any desired elongation range within the elastic limit of the material.

11. The fiber or fabric of claim 10, further having an initial inductive reactance and an inductive reactance that varies with elongation.

12. The fiber or fabric of claim 11, wherein the predetermined formula of electrically conductive particles are selected from the group consisting of conductive metals and metal alloys, metal oxides and salts; metal, metal- oxide and salts plated particles; metal, metal-oxide and salts plated polymer-based particles; inherently conductive polymers and polymer particles; carbon-based conductive materials and nanoparticles; semiconducting materials; electronic molecules.

13. The fiber or fabric of claims 1 or 2, wherein a dispersion of electrically conductive particles are mixed with at least one of a solution and dispersion of the elastomer polymer.

14. The fiber or fabric of claims 1 or 2, wherein an electrically conductive particle is mixed with at least one of a solution and dispersion of the elastomer polymer.

15. The fiber or fabric of claims 1 or 2, wherein a dispersion of electrically conductive particle is applied onto a surface of the elastomer polymer.

16. The fiber or fabric of claims 1 or 2, wherein an electrically conductive particle is applied onto a surface of the elastomer polymer.

17. The fiber or fabric of claims 1 or 2, wherein an electrically conductive particle is mixed with the elastomer polymer in a melt state.

18. The fiber or fabric of claims 1 or 2, having an initial electrical resistance and an electrical resistance that varies with compression.

19. A method for making electrically conductive elastomeric structures comprising:
adding antimony-doped tin oxide electrically conductive particles or single-wall carbon nanotubes to an elastomer polymer to form a mixture;
melting the mixture of antimony-doped tin oxide electrically conductive particles or single-wall carbon nanotubes and the elastomer polymer;
forcing the mixture into a spinneret to form one or more fibers; and
extruding the fibers to form an electrically conductive elastomeric structure.

20. A method for making electrically conductive elastomeric fiber, yarn, or fabric, comprising:
depositing antimony-doved tin oxide electrically conductive particles or single-wall carbon nanotubes onto the elastomer polymer surface; and
drying the mixture at temperatures less than 180°C to form the electrically conductive elastomeric fiber, yarn, or fabric.

21. The method of claim 20, wherein depositing the dispersion of electrically conductive particles further comprises physical or chemical grafting.

22. The method of claim 21, wherein at least one of the elastomer polymer surface and the electrically conductive particles are surface-functionalized so as to create a strong interaction between the particles and the surface.

23. The method of claim 20, wherein depositing the mixture further comprises stretching the surface to at least 10% elongation.

24. The method of claim 20, wherein drying the mixture comprises relaxing the coated surface to 0% stretch.

## Patentansprüche

1. Eine Faser oder ein textiles Erzeugnis, das aus einer elektrisch leitfähigen Elastomer-Struktur gebildet wird, aufweisend einen anfänglichen elektrischen Widerstand und einen elektrischen Widerstand, der mit der Ausdehnung variiert, wobei die Elastomer-Struktur aufweist:
ein Elastomer-Polymer; und
elektrisch leitfähige Partikel mit Antimon-dotiertem Zinnoxid oder Ein-Wand-Karbon-Nanoröhren, die in dem Elastomer-Polymer verteilt sind, wobei eine vorbestimmte Formel von elektrisch leitfähigen Partikeln in einer vorbestimmten Konzentration mit einer vorbestimmten Formel des Elastomer-Polymers gemischt wird, um die elektrisch leitfähige Elastomer-Struktur mit einer elastischen Dehnungs- und Wiederherstellungseigenschaft bereitzustellen, die einen Hysterese-Effekt des elektrischen Widerstands ausschließt oder wesentlich einschränkt.

2. Eine Faser oder eine textile Struktur mit einer Beschichtung einer elektrisch leitfähigen Elastomer-Struktur, aufweisend einen anfänglichen elektrischen Widerstand und einen elektrischen Widerstand, der mit der Ausdehnung variiert, wobei die Elastomer-Struktur aufweist:
ein Elastomer-Polymer; und
elektrisch leitfähige Partikel mit Antimon-dotiertem Zinnoxid oder Ein-Wand-Karbon-Nanoröhren, die in dem Elastomer-Polymer verteilt sind, wobei eine vorbestimmte Formel von elektrisch leitfähigen Partikeln in einer vorbestimmten Konzentration mit einer vorbestimmten Formel des Elastomer-Polymers gemischt wird, um die elektrisch leitfähige Elastomer-Struktur mit einer elastischen Dehnungs- und Wiederherstellungseigenschaft bereitzustellen, die einen Hysterese-Effekt des elektrischen Widerstands ausschließt oder wesentlich einschränkt.

3. Eine Faser oder eine textile Struktur nach Anspruch 1 oder 2, wobei die elastische Dehnungs- und Wiederherstellungseigenschaft weiterhin einen elektrischen Widerstand bereitstellt, der gleich ist oder im Wesentlichen gleich ist dem Anfangswiderstandswert nach mindestens fünf elastischen Dehnungs- und Wiederherstellungszyklen.

4. Eine Faser oder eine textile Struktur nach Anspruch 3, wobei die elastische Dehnungs- und Wiederherstellungseigenschaft weiterhin einen elektrischen Widerstand bereitstellt, der gleich ist oder im Wesentlichen gleich ist dem ungedehnten Widerstandswert während eines Zyklus von Dehnung und Wiederherstellung nach zumindest fünf elastischen Dehnungs- und Wiederherstellungszyklen.

5. Eine Faser oder eine textile Struktur nach Anspruch 4, wobei die elastische Dehnungs- und Wiederherstellungseigenschaft weiterhin die Eigenschaft hat, dass im Wesentlichen keine dauerhaften physikalischen Deformationen und im Wesentlichen keine dauerhafte Änderung des anfänglichen elektrischen Widerstands aus einer Ausdehnung innerhalb einer elastischen Grenze des Elastomer-Polymers resultiert.

6. Eine Faser oder eine textile Struktur nach Anspruch 5, wobei die vorbestimmte Konzentration als ein Gewichtsverhältnis der elektrisch leitfähigen Partikel zu dem Elastomer-Polymer ausgedrückt wird.

7. Eine Faser oder eine textile Struktur nach Anspruch 6, wobei die vorbestimmte Konzentration kleiner als 2:1 ist und die elektrisch leitfähige Elastomer-Struktur eine Bruchdehnung von größer als 100 % hat.

8. Eine Faser oder eine textile Struktur nach Anspruch 7, wobei der elektrische Widerstand über einen Bereich von mindestens 50 % und bis zu 10 Größenordnungen variiert, bei einer Auslenkung bis zur elastischen Grenze der elektrisch leitfähigen Elastomer-Struktur.

9. Eine Faser oder eine textile Struktur nach Anspruch 8, wobei der elektrische Widerstand variiert über einen Bereich von mindestens 50 % und bis zu 10 Größenordnungen des anfänglichen elektrischen Widerstand bei einer Ausdehnung bis zu 100 %.

10. Eine Faser oder eine textile Struktur nach Anspruch 9, wobei der elektrische Widerstand eine zugeschnittene Funktion der Auslenkung zeigt, so dass der Übergang von einem niedrigsten elektrischen Widerstand zu einem höchsten elektrischen Widerstand in jedem gewünschten Auslenkungsbereich innerhalb der elastischen Grenze des Materials auftreten kann.

11. Eine Faser oder eine textile Struktur nach Anspruch 10, weiterhin aufweisend einen anfänglichen Induktionswiderstand und einen Induktionswiderstand, der mit der Ausdehnung variiert.

12. Eine Faser oder eine textile Struktur nach Anspruch 11, wobei die vorbestimmte Formel von elektrisch leitfähigen Partikeln ausgewählt ist aus der Gruppe die besteht aus: Leitenden Metallen und Metalllegierungen, Metalloxiden und -salzen; mit Metallen, Metalloxiden und -salzen beschichtete Partikel; mit Metallen, Metalloxiden und -salzen beschichtete Polymerbasierte Partikel; inhärent leitfähigen Polymeren und Polymer-Partikeln, Karbon-basierten leitfähigen Materialien und Nanopartikeln; halbleitenden Materialien, elektronischen Molekülen.

13. Eine Faser oder eine textile Struktur nach Anspruch 1 oder 2, wobei eine Dispersion von elektrisch leitfähigen Partikeln mit einer Lösung und/oder Dispersion des Elastomer-Polymers gemischt wird.

14. Eine Faser oder eine textile Struktur nach Anspruch 1 oder 2, wobei ein elektrisch leitfähiges Partikel mit einer Lösung und / oder einer Dispersion des Elastomer-Polymers gemischt wird.

15. Eine Faser oder eine textile Struktur nach Anspruch 1 oder 2, wobei eine Dispersion von elektrisch leitfähigen Partikeln auf eine Oberfläche des Elastomer-Polymers angewandt wird.

16. Eine Faser oder eine textile Struktur nach Anspruch 1 oder 2, wobei ein elektrisch leitfähiges Partikel auf eine Oberfläche des Elastomer-Polymers angewandt wird.

17. Eine Faser oder eine textile Struktur nach Anspruch 1 oder 2, wobei ein elektrisch leitfähiges Partikel mit dem Elastomer-Polymer in einem Schmelzzustand gemischt wird.

18. Eine Faser oder eine textile Struktur nach Anspruch 1 oder 2, die einen anfänglichen elektrischen Widerstand und einen elektrischen Widerstand, der mit einer Kompression variiert, aufweist.

19. Verfahren zum Herstellen von elektrisch leitfähigen Elastomer-Strukuren, aufweisend:
Hinzufügen von elektrisch leitfähigen Partikeln mit Antimon-dotiertem Zinnoxid oder Ein-Wand-Karbon-Nanoröhren zu einem Elastomer-Polymer, um eine Mischung zu bilden;
Schmelzen der Mischung aus elektrisch leitfähigen Partikeln mit Antimon-dotiertem Zinnoxid oder Ein-Wand-Karbon-Nanoröhren und des Elastomer-Polymers;
Treiben der Mixtur in eine Spinndüse, um eine oder mehrere Fasern zu bilden; und
Extrudieren der Fasern, um eine elektrisch leitfähige Elastomer-Struktur zu bilden.

20. Verfahren zum Herstellen von elektrisch leitfähigen Elastomer-Fasern, Garn oder textilen Strukturen, aufweisend:
Deponieren von elektrisch leitfähigen Partikeln mit Antimon-dotiertem Zinnoxid oder Ein-Wand-Karbon-Nanoröhren auf der Oberfläche des Elastomer-Poylmers; und
Trocknen der Mixtur bei Temperaturen von weniger als 180°C, um elektrisch leitfähige Fasern, Garn oder textile Strukturen zu bilden.

21. Verfahren nach Anspruch 20, wobei das Deponieren der Dispersion von elektrisch leitfähigen Partikeln weiterhin physikalisches oder chemisches Aufpolymerisieren oder Grafting umfasst.

22. Verfahren nach Anspruch 21, wobei die Oberfläche des Elastomer-Polymers und / oder die elektrisch leitfähigen Partikel Oberflächen-funktionalisiert sind, um eine starke Wechselwirkung zwischen den Partikeln und der Oberfläche zu erzeugen.

23. Verfahren nach Anspruch 20, wobei das Deponieren der Mixtur weiterhin Dehnen der Oberfläche bis mindestens 10 % Ausdehnung umfasst.

24. Verfahren nach Anspruch 20, wobei das Trocknen der Mixtur Entspannen der beschichteten Oberfläche zu 0 % Ausdehnung umfasst.

## Revendications

1. Une fibre ou un tissu formé d'une structure élastomère électriquement conductrice présentant une résistance électrique initiale et une résistance électrique qui varie avec l'allongement, la structure élastomère comprenant :
un polymère élastomère ; et
des particules électriquement conductrices d'oxyde d'étain dopé à l'antimoine ou des nanotubes de carbone à simple paroi dispersés dans le polymère élastomère, où une formule prédéterminée des particules électriquement conductrice est mélangée à une concentration prédéterminée avec une formule prédéterminée du polymère élastomère pour procurer à la structure élastomère électriquement conductrice des propriétés d'étirement élastique et de récupération qui éliminent ou substantiellement limitent un effet d'hystérésis sur la résistance électrique.

2. Une fibre ou un tissu ayant un revêtement d'une structure élastomère électriquement conductrice présentant une résistance électrique initiale et une résistance électrique qui varie avec l'allongement, la structure élastomère comprenant :
un polymère élastomère ; et
des particules électriquement conductrices d'oxyde d'étain dopé à l'antimoine ou des nanotubes de carbone à simple paroi dispersés dans le polymère élastomère, où une formule prédéterminée des particules électriquement conductrice est mélangée à une concentration prédéterminée avec une formule prédéterminée du polymère élastomère pour procurer à la structure élastomère électriquement conductrice des propriétés d'étirement élastique et de récupération qui éliminent ou substantiellement limitent un effet d'hystérésis sur la résistance électrique.

3. La fibre ou le tissu des revendications 1 ou 2, dans lesquels les propriétés d'étirement élastique et de récupération procurent en outre une résistance électrique qui est au moins l'une d'égale ou substantiellement égale à la valeur de résistance initiale après au moins cinq cycles d'étirement élastique et de récupération.

4. La fibre ou le tissu de la revendication 3, dans lesquels les propriétés d'étirement élastique et de récupération procurent en outre une résistance électrique qui est au moins l'une d'égale ou substantiellement égale à la résistance non étirée durant un cycle d'étirement élastique et de récupération après au moins cinq cycles d'étirement élastique et de récupération.

5. La fibre ou le tissu de la revendication 4, dans lesquels les propriétés d'étirement élastique et de récupération assurent en outre que substantiellement aucune déformation physique permanente et substantiellement aucune modification permanente de la résistance électrique initiale ne résultent d'un allongement compris dans une limite élastique du polymère élastomère.

6. La fibre ou le tissu de la revendication 5, dans lesquels la concentration prédéterminée est exprimée en rapport pondéral des particules électriquement conductrices par rapport au polymère élastomère.

7. La fibre ou le tissu de la revendication 6, dans lesquels la concentration prédéterminée est inférieure à 2:1 et la structure élastomère électriquement conductrice présente un allongement à la rupture supérieure à 100 %.

8. La fibre ou le tissu de la revendication 7, dans lesquels la résistance électrique varie sur une plage d'au moins 50 % et jusqu'à dix (10) ordres de grandeur avec un allongement jusqu'à la limite élastique de la structure élastomère électriquement conductrice.

9. La fibre ou le tissu de la revendication 8, dans lesquels la résistance électrique varie sur une plage d'au moins 50 % et jusqu'à dix (10) ordres de grandeur à partir de la résistance électrique initiale avec un allongement allant jusqu'à 100 % d'allongement.

10. La fibre ou le tissu de la revendication 9, dans lesquels la résistance électrique présente une fonction façonnée sur l'allongement, de sorte que la transition depuis une résistance électrique la plus faible jusqu'à une résistance électrique la plus élevée puisse avoir lieu pour toute plage d'allongement souhaitée dans la limite élastique du matériau.

11. La fibre ou le tissu de la revendication 9, présentant en outre une réactance inductive initiale et une réactance inductive qui varie avec l'allongement.

12. La fibre ou le tissu de la revendication 11, dans lesquels la formule prédéterminée des particules électriquement conductrices est choisie dans le groupe formé par les métaux conducteurs et les alliages métalliques, les oxydes métalliques et leurs sels ; les particules plaquées de métal, d'oxyde métallique et de leurs sels ; les particules à base de polymère plaquées de métal, d'oxyde métallique et de leurs sels ; les particules de polymère et les polymères intrinsèquement conducteurs ; les nanoparticules et les matériaux conducteurs à base de carbone ; les matériaux semi-conducteurs ; les molécules électroniques.

13. La fibre ou le tissu des revendications 1 ou 2, dans lesquels une dispersion de particules électriquement conductrices est mélangée avec au moins l'une d'une solution et d'une dispersion du polymère élastomère.

14. La fibre ou le tissu des revendications 1 ou 2, dans lesquels une particule électriquement conductrice est mélangée avec au moins l'une d'une solution et d'une dispersion du polymère élastomère.

15. La fibre ou le tissu des revendications 1 ou 2, dans lesquels une dispersion des particules électriquement conductrices est appliquée par-dessus une surface du polymère élastomère.

16. La fibre ou le tissu des revendications 1 ou 2, dans lesquels une particule électriquement conductrice est appliquée par-dessus une surface du polymère élastomère.

17. La fibre ou le tissu des revendications 1 ou 2, dans lesquels une particule électriquement conductrice est mélangée avec le polymère élastomère dans un état fondu.

18. La fibre ou le tissu des revendications 1 ou 2, présentant une résistance électrique initiale et une résistance électrique qui varie avec la compression.

19. Un procédé de fabrication de structures élastomères électriquement conductrices comprenant :
l'addition de particules électriquement conductrices d'oxyde d'étain dopé à l'antimoine ou de nanotubes de carbone à simple paroi à un polymère élastomère pour former un mélange ;
la fusion du mélange des particules électriquement conductrices d'oxyde d'étain dopé à l'antimoine ou des nanotubes de carbone à simple paroi et du polymère élastomère ;
le forçage du mélange dans une filière pour former une ou plusieurs fibres ; et
l'extrusion des fibres pour former une structure élastomère électriquement conductrice.

20. Un procédé pour fabriquer une fibre, un fil ou un tissu élastomère, comprenant :
le dépôt de particules électriquement conductrices d'oxyde d'étain dopé à l'antimoine ou de nanotubes de carbone à simple paroi par-dessus la surface du polymère élastomère ; et
le séchage du mélange à des températures inférieures à 180°C pour former la fibre, le fil ou le tissu élastomère électriquement conducteur.

21. Le procédé de la revendication 20, dans lequel le dépôt de la dispersion de particules électriquement conductrices comprend en outre une greffe physique ou chimique.

22. Le procédé de la revendication 21, dans lequel au moins l'une de la surface du polymère élastomère et des particules électriquement conductrices est fonctionnalisée en surface de manière à créer une interaction forte entre les particules et la surface.

23. Le procédé de la revendication 20, dans lequel le dépôt du mélange comprend en outre l'étirement de la surface à un allongement d'au moins 10 %.

24. Le procédé de la revendication 20, dans lequel le séchage du mélange comprend le relâchement de la surface revêtue jusqu'à un étirement de 0 %.
